# EUROPÄISCHE PATENTSCHRIFT

(11) **EP 0 461 104 B1**
(45) Veröffentlichungstag und Bekanntmachung des Hinweises auf die Patenterteilung: **03.11.1993**
(21) Anmeldenummer: 91890121.6
(22) Anmeldetag: 04.06.1991
(51) Int. Cl.: B60J 5/06, E05F 15/10, E05D 15/10

(54) **Schwenkschiebetür**
Swing out sliding door
Porte basculante et coulissante

(30) Priorität: 05.06.1990 AT 1216/90
(43) Veröffentlichungstag der Anmeldung: 11.12.1991
(73) Patentinhaber: IFE Industrie-Einrichtungen Fertigungs-Aktiengesellschaft, A-3340 Waidhofen a.d. Ybbs (AT)
(72) Erfinder: Fink, Martin, A-3340 Waidhofen a.d. Ybbs (AT)
(74) Vertreter: Barger, Werner, Dipl.-Ing.

(56) Entgegenhaltungen:
- EP-A- 0 291 624
- FR-A- 2 427 457

## Beschreibung

Die Erfindung betrifft eine Schwenkschiebetür, wie sie beispielsweise in der AT-C-377 235 oder in der FR-A-2 427 457 geoffenbart und im Oberbegriff des Anspruches 1 definiert ist Bei derartigen Schwenkschyebetüren wird das Türblatt in Führungen geführt, die oberhalb und unterhalb der Höhenerstreckung des Türblattes am Wagenkasten angeordnet sind, wobei gegebenenfalls diese Führungen auch das Gewicht des Türblattes tragen. Türblattseitig sind die in den Führungen gleitenden Rollen, Schlitten od.dgl. auf einer Konsole angeordnet. Die Bewegung der Türe entlang der Führungen wird von einem Traglenker bewirkt, der an einer Schlittenführung dreh- und längsverschieblich gelagert ist und gegebenenfalls auch das Gewicht des Türblattes tragt. Gemäß der genannten AT-C-377 235 erfolgt der Antrieb über ein Gestänge mit einem Gelenksystem, das von einem Türantriebszylinder verstellt wird. Dieses Gestänge und Gelenksystem ist notwendig, um die Breite des Antriebes nicht wesentlich über die Türbreite vorstehen zu lassen.

Es wurde bei derartigen Schwenkschiebetüren schon ein Antrieb vorgesehen, bei dem ein über Umlenkrollen laufendes in sich geschlossenes Band in Form eines Seiles, eines Teil- oder Zahnriemens oder einer Kette od.dgl. bewirkt wird. Da das Band mit dem Traglenker in Wirkverbindung stehen muß, ist vorgesehen, den Mechanismus, der das umlaufende Band enthält, mit dem Traglenker nach Art eines Gelenkparallelogrammes mit zu verschwenken. Diese Anordnung ist aufwendig, bedingt eine Vielzahl beweglicher und miteinander verbundener Teile und ist demgemäß schwer zu warten und unangenehm zu justieren.

Die Erfindung hat sich das Ziel gesetzt, diese Nachteile zu vermeiden und eine Verbindung zwischen dem Traglenker einer Schwenkschiebetür und einem beliebigen Linearantrieb zu schaffen, die die genannten Nachteile nicht aufweist und auf einfache und zuverlässige Weise für eine Übertragung der Antriebskräfte sorgt. Dabei soll ds auch möglich sein, neben den bekannten kolbenstangenlosen hydraulischen Kolben-Zylinder-Einheiten Linearantriebe aller Art, beispielsweise solche vom Leitspindeltyp, verwenden zu können.

Erfindungsgemäß wird durch die im Kennzeichen des Anspruches 1 enthaltenen Merkmale erreicht, daß dazu am Traglenker mindestens eine Stirnfläche vorgesehen wird, deren radiale Erstreckung vom Drehmittelpunkt des Traglenkers und deren Umfangserstreckung um diesen Drehmittelpunkt ausreichend ist, um bei der Verschwenkung des Traglenkers um seine Schwenkachse immer in den Bewegungsbereich einer Stirnfläche eines Mitnehmers des Linearantriebes zu ragen.

Durch diese Maßnahme ist es möglich, den Linearantrieb fest am Châssis des Wagens zu befestigen, was die bisher erforderlichen Lager, Schwingarme, flexiblen Energieleitungen, bewegten Sensoren und gelenkigen Verbindungen überflüssig macht.

In einer Ausgestaltung ist vorgesehen, daß der Linearantrieb und die Schlittenführung auf einer gemeinsamen Konsole befestigt sind. Durch diese Maßnahme wird erreicht, daß alle Justier- und Einstellarbeiten bereits bei der Herstellung erfolgen können und bei der Montage im Wagenkasten keine Nach- oder Feineinstellung mehr vorgenommen werden muß.

In einer weiteren Ausgestaltung ist vorgesehen, daß der Mitnehmer des Linearantriebes ein Vorsprung ist eine drehbare Rolle aufweist, deren Drehachse normal zur Achse der Schlittenführung verläuft und vorzugsweise diese Achse schneidet, und daß die Stirnflächen des Traglenkers in einer Ebene liegen, die rechtwinkelig zur Achse der Schlittenführung verläuft. Durch diese Maßnahme wird erreicht, daß ausschließlich rollende Reibung auftritt, wodurch Abnutzung und Energiebedarf verringert, Lebensdauer und Serviceintervalle verlängert werden.

Es ist möglich, daß nur ein Mitnehmer des Linearantriebes vorgesehen ist, und daß auf dem Traglenker zwei Vorsprünge vorgesehen sind, die in axialer Richtung jeweils auf einer Seite des Vorsprunges des Mitnehmers liegen; es ist selbstverständlich auch möglich, zwei Mitnehmer am Linearantrieb vorzusehen, die einen Traglenkervorsprung flankieren.

In einer weiteren Ausgestaltung ist vorgesehen, daß die an der Oberseite der Türe befindliche Führung mit jedem ihrer Enden an der Tragplatte befestigt ist, die die Schlittenführung und den Linearantrieb trägt. Durch diese Maßnahme kann der Justier- und Einstellaufwand weiter verringert werden. Darüberhinaus wird es möglich, ganze Türhalterungen als Einheit auf Lager zu legen und zu versenden, wodurch sowohl die Lagerhaltung als auch der Versand kostengünstig und organisatorisch einfach gestaltet werden können.

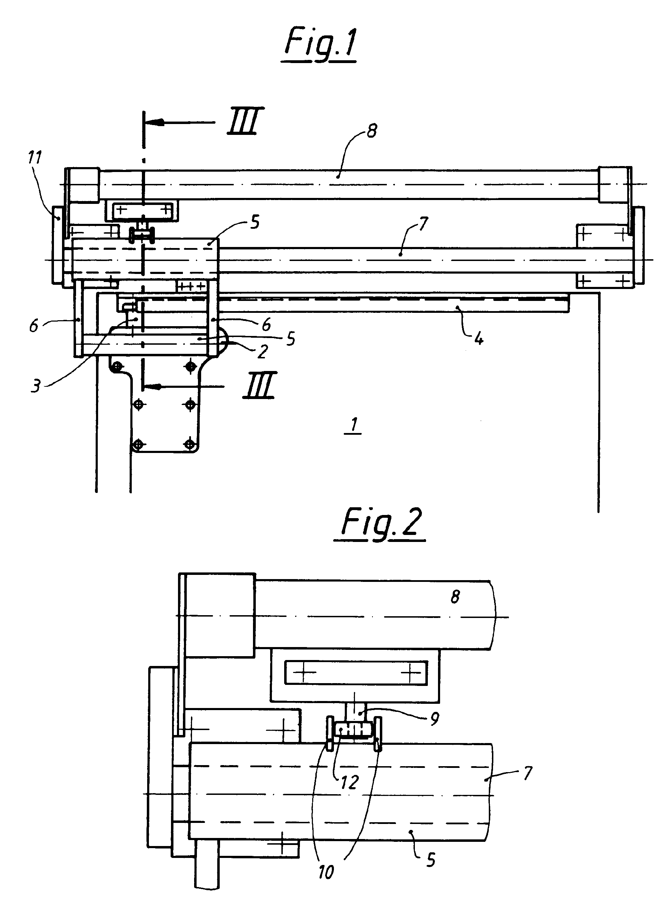

Die Erfindung wird an Hand der beiliegenden Zeichnungen näher erläutert: Dabei zeigt die
Fig. 1 eine Draufsicht auf eine erfindungsgemäße Türführung samt Türe,
Fig. 2 eine Ansicht auf ein Detail der Fig. 1,
Fig. 3 einen Schnitt nach Linie III-III in Fig. 1 und
Fig. 4 einen Schnitt ähnlich dem der Fig. 3 einer anderen Ausführungsform.

Ein Türblatt 1 weist auf seinem oberen Ende eine Konsole 2 auf. Vorsprünge 3 der Konsole 2 wirken mit Führungen 4, die am Wagen fest montiert sind, zusammen und bewirken das Ausschwenken des Türblattes im Zuge der Öffnungsbewegung und seine Führung während des Öffnungs- und Schließvorganges.

Die Konsole 2 ist mit einem Traglenker 5 gelenkig verbunden. Dieser weist Lenkerarme 6 auf und ist mit seinem oberen, schlittenförmigen Teil 5′ dreh- und längsverschieblich an einer Schlittenführung 7 gelagert.

Parallel zur Schlittenführung 7 verläuft ein Linearantrieb 8, der einen Mitnehmer 9, der die Form eines Vorsprunges hat, aufweist. In die Bewegungsbahn des Mitnehmers 9 ragen zwei mit dem Traglenker 5 fest verbundene Flügel 10, die in radialer und in Umfangsrichtung zumindest so groß sind, daß bei einer Verschwenkung des Traglenkers 5 um die Schlittenführung 7 in dem durch die Führung 4 vorgegebenen Ausmaß ein Vorbeigleiten des Mitnehmers 9 an den Flügeln 10 ausgeschlossen ist.

Im dargestellten Ausführungsbeispiel ist ein Mitnehmer 9 vorgesehen, der von zwei Flügeln 10 flankiert wird. Es ist selbstverständlich möglich, zwei Mitnehmer 9 vorzusehen, die zu beiden Seiten nur eines Flügels 10 angeordnet sind. Es ist weiters möglich, den Mitnehmer 9 in Umfangsrichtung bezüglich der Achse der Schlittenführung 7 so groß zu gestalten, daß die Flügel 10 nur die Form von Stiften annehmen müssen, um die ihnen zugedachte Aufgabe erledigen zu können.

Es ist selbstverständlich auch möglich, den Mitnehmer 9 so lang auszuführen bzw. den Linearantrieb so nahe an der Schlittenführung 7 anzuordnen, daß die Mitnahme durch Eingreifen des Mitnehmers 9 in eine in Umfangsrichtung verlaufende Nut des Traglenkers 12 erfolgt. Es führt diese Ausführungsform jedoch zu einer Schwächung des Traglenkers und macht auch einen Austausch bzw. eine Inspektion der Bestandteile nur erschwert möglich.

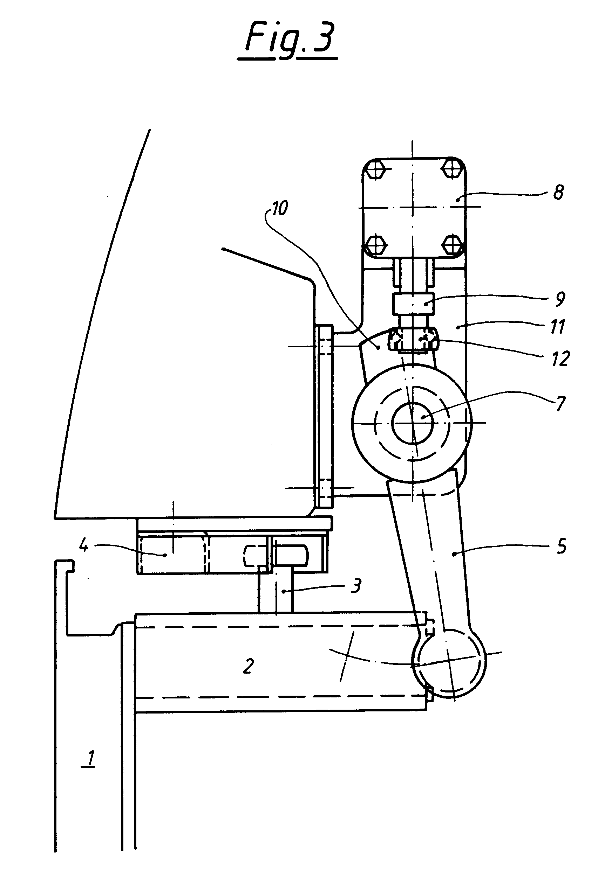

Bei dem in Fig. 3 gezeigten Ausführungsbeispiel ist der Linearantrieb 8 gemeinsam mit der Schlittenführung 7 auf einer Konsole 11 befestigt. Durch diese Maßnahme entfällt eine besondere Montage des Antriebes 8 am Wagenkasten und damit auch jedes Justieren und Einstellen des Antriebes 8 bezüglich der Schlittenführung 7 im Wagenkasten. Diese heiklen und im Wagenkasten nur an schlecht zugänglicher Stelle durchzuführenden Arbeiten können so bereits in der Fabrik unter gleichbleibenden und besseren Bedingungen vorgenommen werden.

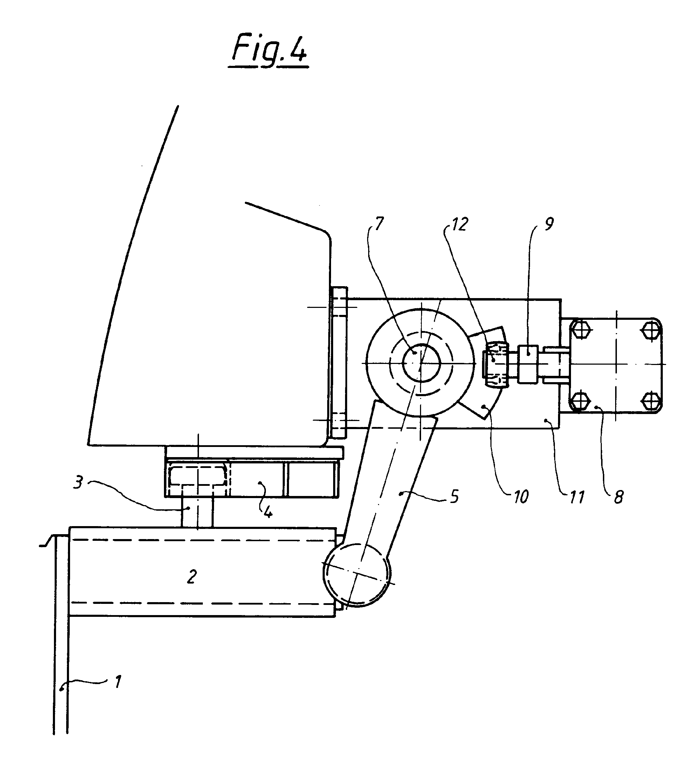

Fig. 4 zeigt eine Anordnung ähnlich der in Fig. 3, wobei jedoch für den Fall, daß oberhalb der Türführung im Wagenkasten nicht genug Platz frei ist, der Antrieb 8 in gleicher Höhe mit der Schlittenführung 7 waagrecht neben der Schlittenführung vorgesehen ist. Die erfindungsgemäß erreichten Vorteile bleiben dabei voll erhalten. Es ist nur notwendig, die Flügel 10 in Umfangsrichtung um 90° bezüglich der Stellung, in der sie in Fig. 3 vorgesehen sind, verschwenkt anzubringen. Wenn es die Platzverhältnisse erlauben, ist es selbstverständlich möglich, die Flügel 10 in einem so großen Umfangsabschnitt anzubringen, daß jede mögliche Lage zwischen Antrieb 8 und Schlittenführung 7 durch immer die gleichen Flügel 10 abgedeckt ist, wodurch die Produktion und die Lagerhaltung weiter vereinfacht wird.

In den gezeigten Beispielen weist der Mitnehmer 9 an seinem unteren Ende eine Rolle 12 auf, deren Rotationsachse mit der Richtung des Mitnehmers 9 zumindest im wesentlichen zusammenfällt und die vorteilhafterweise die Achse der Schlittenführung 7 im rechten Winkel schneidet.

Durch diese Rolle 12 wird beim Verschwenken des Traglenkers 5 jede gleitende Reibung zwischen den Flügeln 10 und dem Mitnehmer 9 vermieden. Es ist selbstverständlich möglich, die Rolle auf einem dornartigen Fortsatz des Traglenkers 5 vorzusehen und den Mitnehmer 9 flügelartig auszubilden und so die Kinematik umzukehren.

Die Erfindung ist nicht auf die dargestellten Ausführungsbeispiele beschränkt, sondern kann, wie oben erläutert, vielfach modifiziert und abgewandelt werden. Wesentlich ist dabei, daß Stirnflächen des Linearantriebes 8 und des sich zu ihm parallel verschiebenden Traglenkers 5 so angeordnet sind, daß sie auch durch die Verschwenkbewegung des Traglenkers 5 nicht außer Eingriff gelangen können. Diese Flächen können durch entsprechende Vorsprünge, Einschnitte, Rollen oder Ringe ausgebildet sein, wodurch es möglich wird, sowohl die Schlittenführung als auch den Linearantrieb ortsfest vorzusehen. Es ist durch diese Maßnahme in Sonderfällen sogar denkbar, einen oder beide Lenkerarme 6 als Flügel zu verwenden.

## Patentansprüche

1. Schwenkschiebetür für Fahrzeuge, mit einem in Führungen geführten Türblatt (1), dessen Bewegung entlang den Führungen (4) von einem Traglenker (5) bewirkt wird, der an einer Schlittenführung (7) dreh- und längsverschieblich gelagert ist und der von einem Linearantrieb (8), der im wesentlichen parallel zur Schlittenführung und fest am Châssis des Fahrzeuges angeordnet ist, in Bewegung versetzt wird, dadurch gekennzeichnet, daß am Traglenker (5) mindestens eine Stirnfläche (10) und am Linearantrieb (8) ein Mitnehmer (9) vorgesehen ist, wobei die Stirnfläche (10) in jeder Lage des Traglenkers (5) bei seiner Verschwenkung um dessen Schwenkachse in die Bewegungsbahn des Mitnehmers (9) des Linearantriebes (8) ragt.

2. Schwenkschiebetür nach Anspruch 1, dadurch gekennzeichnet, daß der Linearantrieb (8) und die Schlittenführung (7) auf einer gemeinsamen Konsole (11) befestigt sind.

3. Schwenkschiebetür nach Anspruch 1 oder 2, dadurch gekennzeichnet, daß der Mitnehmer (9) des Linearantriebes (8) ein Vorsprung mit einer Stirnfläche ist, die in einer Ebene liegt, die rechtwinkelig zur Achse der Schlittenführung verläuft, und daß die Stirnfläche des Traglenkers (5) eine drehbare Rolle aufweist, deren Drehachse normal zur Achse der Schlittenführung (7) verläuft und vorzugsweise diese Achse schneidet.

4. Schwenkschiebetür nach Anspruch 1 oder 2, dadurch gekennzeichnet, daß der Mitnehmer (9) des Linearantriebes (8) ein Vorsprung ist und eine drehbare Rolle (12) aufweist, deren Drehachse normal zur Achse der Schlittenführung (7) verläuft und vorzugsweise diese Achse schneidet, und daß die Stirnflächen (10) des Traglenkers (5) in einer Ebene liegen, die rechtwinkelig zur Achse der Schlittenführung verläuft.

5. Schwenkschiebetür nach Anspruch 2, dadurch gekennzeichnet, daß die an der Oberseite der Türe (1) befindliche Führung (4) mit jedem ihrer Enden an der Konsole (11) befestigt ist, die die Schlittenführung (7) und den Linearantrieb (8) trägt.

## Claims

1. A swinging-sliding door for vehicles, with a door leaf (1) guided in guides, the movement of which along the guides (4) is effected by a bearer arm (5), which is mounted on a sliding runner (7) so that it is rotatable and longitudinally displaceable and is set in motion by a linear drive (8) which is disposed substantially parallel to the sliding runner and fixed to the chassis of the vehicle, characterised in that at least one face (10) is provided on the bearer arm (5) and at least one carrier (9) is provided on the linear drive (8), wherein the face (10) projects into the path of movement of the carrier (9) of the linear drive (8) in each position of the bearer arm (5) when the latter swings about its swivelling axis.

2. A swinging-sliding door according to claim 1, characterised in that the linear drive (8) and the sliding runner (7) are attached to a common bracket (11).

3. A swinging-sliding door according to claim 1 or 2, characterised in that the carrier (9) of the linear drive (8) is a projection with a face which lies in a plane running at right angles to the axis of the sliding runner, and that the face of the bearer arm (5) has a rotatable roller, the axis of rotation of which is normal to the axis of the sliding runner (7) and preferably intersects this axis.

4. A swinging-sliding door according to claim 1 or 2, characterised in that the carrier (9) of the linear drive (8) is a projection and has a rotatable roller (12), the axis of rotation of which is normal to the axis of the sliding guide (7) and preferably intersects this axis, and that the faces (10) of the bearer arm (5) lie in a plane which runs at right angles to the axis of the sliding runner.

5. A swinging-sliding door according to claim 2, characterised in that the guide (4) located at the upper side of the door (1) is attached at each of its ends to the bracket (11) which supports the sliding runner (7) and the linear drive (8).

## Revendications

1. Porte basculante et coulissante pour véhicules, comprenant un panneau de porte (1) guidé dans des guides, dont le déplacement le long des guides (4) est produit par un bras porteur (5) qui est monté mobile en rotation et en translation sur un guide de chariot (7), et ledit bras porteur étant mis en déplacement par un entraînement linéaire (8) qui est disposé sensiblement parallèlement au guide de chariot et solidairement sur le châssis du véhicule, caractérisée en ce qu'il est prévu au moins une surface frontale (10) sur le bras porteur (5) et un poussoir sur l'entraînement linéaire (8), la surface frontale (10) dépassant dans le trajet de déplacement du poussoir (9) de l'entraînement linéaire (8) dans toute position du bras porteur (5) lors de son basculement autour de son axe de basculement.

2. Porte basculante et coulissante selon la revendication 1, caractérisée en ce que l'entraînement linéaire (8) et le guide de chariot (7) sont fixés sur une console commune (11).

3. Porte basculante et coulissante selon l'une ou l'autre des revendications 1 et 2, caractérisée en ce que le poussoir (9) de l'entraînement linéaire (8) est une saillie avec une surface frontale qui est située dans un plan perpendiculaire à l'axe du guide de chariot, et en ce que la surface frontale du bras porteur (5) comporte un galet rotatif dont l'axe de rotation est perpendiculaire à l'axe du guide de chariot (7) et coupe de préférence cet axe.

4. Porte basculante et coulissante selon l'une ou l'autre des revendications 1 et 2, caractérisée en ce que le poussoir (9) de l'entraînement linéaire (8) est une saillie et comporte un galet rotatif (12) dont l'axe de rotation est perpendiculaire à l'axe du guide de chariot (7) et coupe de préférence cet axe, et en ce que les surfaces frontales (10) du bras porteur (5) sont situées dans un plan qui forme un angle droit avec l'axe du guide de chariot.

5. Porte basculante et coulissante selon la revendication 2, caractérisée en ce que le guide (4) qui se trouve sur le côté supérieur de la porte (1) est fixé par chacune de ses extrémités sur la console (11) qui porte le guide de chariot (7) et l'entraînement linéaire (8).
